# EUROPEAN PATENT SPECIFICATION

(11) **EP 4 589 825 B1**
(45) Date of publication and mention of the grant of the patent: **18.02.2026**
(21) Application number: 25151817.1
(22) Date of filing: 14.01.2025
(51) Int. Cl.: H02K 7/14, H02K 9/20, B60K 7/00, H02K 11/00

(54) **INTEGRATED COOLING UNIT FOR IN-WHEEL MOTOR**
INTEGRIERTE KÜHLEINHEIT FÜR EINEN RADINTERNEN MOTOR
UNITÉ DE REFROIDISSEMENT INTÉGRÉE POUR MOTEUR-ROUE

(30) Priority: 18.01.2024 CN 202410071393
(43) Date of publication of application: 23.07.2025
(73) Proprietor: Tianjin University, Tianjin 300350 (CN)
(72) Inventor: CHEN, Zhihao, Tianjin City, 300350 (CN); UTAKA, Yoshio, Tianjin City, 300350 (CN)
(74) Representative: Patent 42

(56) References cited:
- JP-A- 2006 282 158
- JP-A- 2023 061 299
- US-A1- 2008 067 882
- US-A1- 2012 024 610
- US-A1- 2023 135 457
- US-B2- 7 462 963

## Description

### Technical Field

The present invention relates to the technical field of cooling devices, and particularly to an integrated cooling unit for an in-wheel motor.

### Background

The main feature of in-wheel motor technology for electric vehicles (EVs) is that a driving motor of a vehicle is integrated inside a wheel hub, so that the integration is high and transmission parts can be reduced, and there are many advantages such as flexible control, high degree of freedom, energy saving and small space occupation. However, a big problem that restricts the development of the in-wheel motor is poor heat dissipation and overheating of motor caused by high integration. Cooling methods for in-wheel motors of EVs are roughly divided into three categories: air cooling, liquid cooling and phase change cooling.

However, existing cooling methods for in-wheel motors of EVs all have the technical problems of poor cooling effect, low integration and high equipment weight. Document JP 2023 061299 A (E GLE CO LTD) 1 May 2023 (2023-05-01) discloses a cooling unit of the prior art.

### Summary

In view of this, in order to solve the technical problems of poor cooling effect and low integration in existing cooling methods for in-wheel motors of EVs, the present invention provides an integrated cooling unit for an in-wheel motor, wherein an airtight container designed in combination with a shape of the in-wheel motor for packaging a cooling working medium is arranged in the in-wheel motor, and efficient cooling of the in-wheel motor (comprising an electric control chip and a motor coil) is realized by utilizing phase change heat transfer of the cooling working medium. The working medium in the cooling unit boils and generates vapor, the vapor is led out to a condenser from a vapor guide port to condense into a liquid, and then the liquid returns to the cooling unit through a liquid return port to form circulation. A bubble pump is laid on an inner wall surface of the airtight container, and the bubble pump drives the cooling working medium to be conveyed to an upper portion by utilizing a rising flow induced by bubble rising, so that the whole in-wheel motor is relatively uniformly cooled.

In order to achieve the above objective, the present invention provides the following technical solution.

An integrated cooling unit for an in-wheel motor comprises:
an airtight container, which is arranged inside the in-wheel motor, used for packaging a cooling working medium, and provided with a vapor outlet and a liquid return port;
a bubble pump, which is laid on an inner wall surface of the airtight container, and used for driving the cooling working medium to be conveyed to an upper portion of the airtight container;
a motor coil, which is laid on an outside outer wall surface of the airtight container; and
an electric control chip, which is arranged on the wall surface of the airtight container, and the cooling working medium reaching a mounting position of the electric control chip.

Preferably, the bubble pump comprises a first bubble pump, and the first bubble pump is arranged on one side of an inner wall surface of the airtight container.

Preferably, the other side of the inner wall surface of the airtight container is provided with a second bubble pump.

Preferably, the electric control chip is laid on an inside outer wall surface of the airtight container, and a high thermal conductivity copper plate is laid on an outer side of the electric control chip.

Preferably, a wick for strengthening boiling heat transfer is laid on an inside inner wall surface of the airtight container.

Preferably, the electric control chip and the high thermal conductivity copper plate extend to a middle and upper portion of the airtight container.

Preferably, the airtight container is provided with an inserting hole for inserting the electric control chip, and the inserting hole is immersed in the cooling working medium.

Preferably, a filling amount of the cooling working medium is 30% to 70% of a height of the airtight container.

Preferably, the first bubble pump consists of a plurality of parallel narrow flow paths.

Preferably, two sides of the electric control chip are coated with a thermally conductive grease.

Compared with the prior art, the present invention has the following beneficial effects.

According to the integrated cooling unit for the in-wheel motor provided by the present invention, the airtight container designed in combination with a shape of the in-wheel motor for packaging the cooling working medium is arranged in the in-wheel motor, and efficient cooling is realized by utilizing phase change heat transfer of the cooling working medium, and meanwhile, by improving an integrated level of the in-wheel motor (comprising an electric control system) and a cooling system, a total weight of the system is reduced while improving a cooling performance, and a comprehensive performance of the cooling system of the in-wheel motor is improved. Heating elements such as the electric control chip and the motor coil of the in-wheel motor are mounted in different positions on an outer surface of the airtight container, and indirectly transfer heat to the cooling working medium through heat conduction of the wall surface of the container and are cooled respectively. The bubble pump is laid on the inner wall surface of the airtight container, and the bubble pump drives the cooling working medium to be conveyed to an upper portion by utilizing a rising flow induced by bubble rising, so that the whole in-wheel motor is relatively uniformly cooled.

According to the integrated cooling unit for the in-wheel motor provided by the present invention, by laying the bubble pump on the inner side of the wall surface of the cooling unit, in combination with the porous wick, the cooling working medium can be efficiently conveyed in an anti-gravity direction, so that the cooling effect can be further improved.

### Brief Description of the Drawings

FIG. 1 is a schematic structural diagram of a first type of integrated cooling unit for an in-wheel motor;
FIG. 2 is a schematic structural diagram of a second type of integrated cooling unit for an in-wheel motor;
FIG. 3 is a schematic structural diagram of a third type of integrated cooling unit for an in-wheel motor;
FIG. 4 is a schematic structural diagram of a fourth type of integrated cooling unit for an in-wheel motor;
FIG. 5 is a cross-sectional view of A-A in FIG. 4;
FIG. 6 is a cross-sectional view of B-B in FIG. 4;
FIG. 7 shows another shape of an inserting hole in the cross-sectional view of B-B in FIG. 4;
FIG. 8 is a schematic structural diagram of a first bubble pump or a second bubble pump; and
FIG. 9 is a schematic diagram of an improvement mode of an arrangement position of an electric control chip in the present invention.

In the drawings, 1--in-wheel motor, 11--airtight container, 111--vapor outlet, 112--liquid return port, 113--cooling working medium, 12--outer wall surface, 121--outside outer wall surface, 122--inside inner wall surface, 13--inner wall surface, 131--outside inner wall surface, 132--inside inner wall surface, 2--first bubble pump, 3--motor coil, 4--electric control chip, 5--high thermal conductivity copper plate, 6--wick, 7--second bubble pump, and 8--inserting hole.

### Detailed Description

The technical solution in embodiments of the present invention will be described clearly and completely hereinafter with reference to the drawings in the embodiments of the present invention. Apparently, the embodiments described are merely some but not all of the embodiments of the present invention. Based on the embodiments of the present invention, all other embodiments obtained by those of ordinary skills in the art without going through any creative work belong to the scope of protection of the present invention.

In the description of the present invention, it should be noted that, the orientation or position relationship indicated by the terms "up", "down", "inner", "outer", "top/bottom end", and the like is based on the orientation or position relationship shown in the drawings, it is only for the convenience of description of the present invention and simplification of the description, and it is not to indicate or imply that the indicated device or element must have a specific orientation, and be constructed and operated in a specific orientation. Therefore, the terms should not be understood as limiting the present invention.

Moreover, the terms "first" and "second" are used for descriptive purposes only and cannot be understood as indicating or implying relative importance.

In the description of the present invention, it should be noted that, the terms "mounting", "providing", "sleeving/sheathing" and "connection" should be understood in a broad sense unless otherwise clearly specified and defined. For example, as for "connection", it may be fixed connection, removable connection or integrated connection; may be mechanical connection or electrical connection; and may be direct connection, indirect connection through an intermediate medium, or connection inside two elements. The specific meanings of the above terms in the present invention can be understood in a specific case by those of ordinary skills in the art.

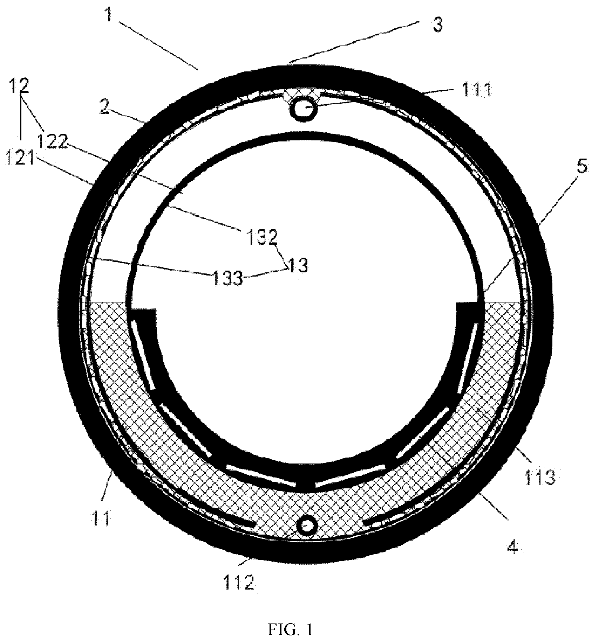

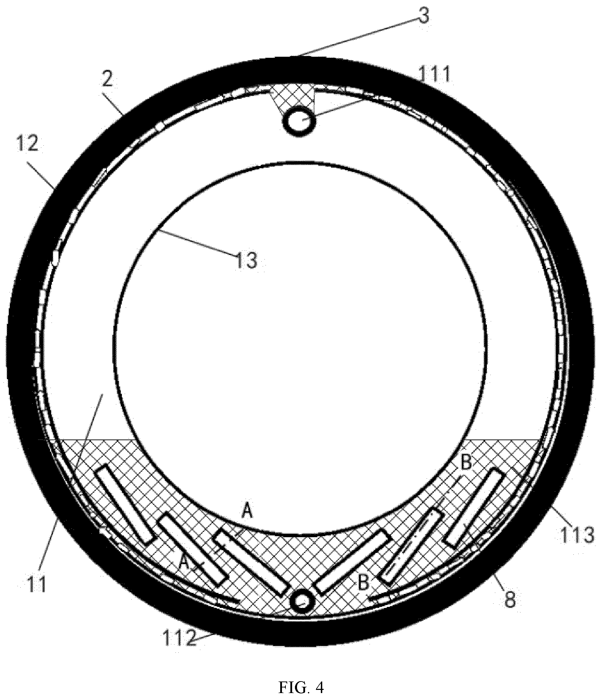

Aiming at a phase change cooling technology for an in-wheel motor of EV, the present invention provides a cooling unit with high integration, which has two main cooling objects: (1) an electric control chip of the in-wheel motor, such as an IGBT chip, a SiC chip and a GaN chip; and (2) a motor coil. In the present invention, the motor coil is mounted on an outside outer wall surface to realize cooling. The electric control chip may be mounted in different positions of the cooling unit, which is electrically connected with the in-wheel motor through wires, and according to different mounting positions of the electric control chip, the cooling unit may be divided into two types. The first type is a chip-attached cooling unit, with a structure as shown in FIG. 1 to FIG. 3; and the second type is a chip-inserted cooling unit, with a structure as shown in FIG. 4.

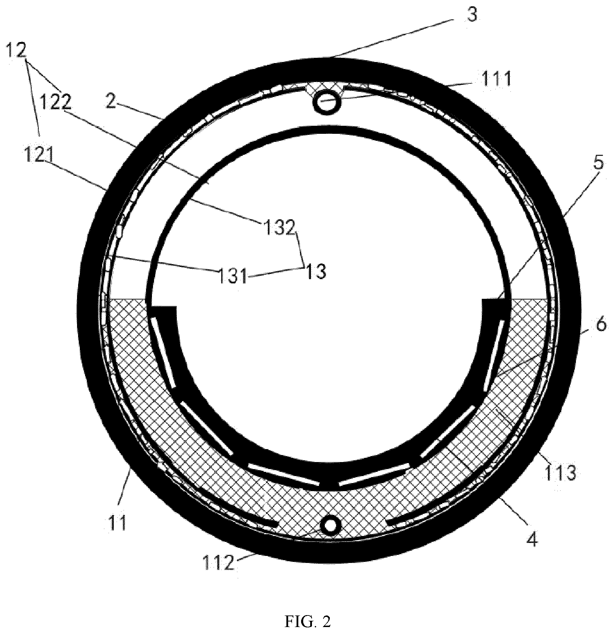

As shown in FIG. 1, the integrated cooling unit for the in-wheel motor is the most basic integrated cooling unit, and the following integrated cooling unit for the in-wheel motor as shown in FIG. 2 to FIG. 4 is a further improved cooling unit on the basis of FIG. 1.

As shown in FIG. 1, the present invention provides an integrated cooling unit for an in-wheel motor, which comprises:
an airtight container 11, which is arranged inside the in-wheel motor 1, connected with an external condenser through a pipeline, used for packaging a cooling working medium 113, and provided with a vapor outlet 111 (connected with the condenser to lead vapor generated by boiling to the condenser) and a liquid return port 112 (connected with the condenser to make a condensed liquid return to the container 11), wherein the airtight container 11 should have strict airtightness, which may be an annular airtight container;
a bubble pump, which is laid on an inner wall surface of the airtight container 11, and used for driving the cooling working medium 113 to be conveyed to an upper portion of the airtight container 11, wherein the airtight container 11 is provided with an outer wall surface 12 and an inner wall surface 13,
a wall surface on which the cooling working medium 113 makes contact with the airtight container 11 is collectively referred to as the inner wall surface 13, and wall surfaces other than the inner wall surface 13 are collectively referred to as the outer wall surface 12;
one side of the inner wall surface 13 close to an outer side is referred to as an outside inner wall surface 131 (a wall surface in contact with the cooling working medium 113), and one side of the inner wall surface 13 close to an inner side is referred to as an inside inner wall surface 132 (a wall surface in contact with the cooling working medium 113);
one side of the outer wall surface 12 close to an outer side is referred to as an outside outer wall surface 121 (corresponding to the outside inner wall surface 131), and one side of the outer wall surface close to an inner side is referred to as an inside outer wall surface 122 (corresponding to the inside inner wall surface 132);
a motor coil 3, which is laid on the outside outer wall surface 121 of the airtight container 11, and is preferably mounted in a tightly attached manner; and
an electric control chip 4, which is arranged on the wall surface of the airtight container 11, and provided with the cooling working medium 113 on the inside inner wall surface 132 corresponding to a mounting position of the electric control chip, wherein a height of the mounting position is preferably lower than a filling liquid level of the cooling working medium to ensure indirect contact with the cooling working medium, the electric control chip 4 may be arranged on the inside outer wall surface 122 of the airtight container 11, because the airtight container 11 is annular, the wall surface is provided with two annular surfaces on two sides besides the outer wall surface 12 and the inner wall surface 13 above, and the electric control chip 4 may also be arranged on the two annular surfaces on two sides of the airtight container 11. Those skilled in the art may choose the mounting position of the electric control chip 4 according to actual needs.

According to the integrated cooling unit for the in-wheel motor provided by the present invention, the cooling working medium 113 is located in a lower half portion of the airtight container 11 due to gravity, and in order to promote heat transfer in an upper half portion of the airtight container, the cooling working medium 113 is conveyed to the upper portion of the container by the bubble pump. The bubble pump drives the cooling working medium to be conveyed to an upper portion by utilizing a rising flow induced by bubble rising, so that the whole in-wheel motor 1 is relatively uniformly cooled.

In the present invention, the bubble pump comprises a first bubble pump 2, the first bubble pump 2 is arranged on one side of the inner wall surface 13 of the airtight container, and the first bubble pump 2 is preferably arranged on the outside inner wall surface 131.

As shown in FIG. 1, in the present invention, the electric control chip 4 is laid on the inside outer wall surface 122 of the airtight container 11, and a high thermal conductivity copper plate 5 with strong thermal conductivity is attached to an outer side of the electric control chip, wherein the high thermal conductivity copper plate 5 is preferably a copper plate. In this way, the electric control chip 4 is attached to the inside outer wall surface 122, and the cooling unit is named as the chip-attached cooling unit. The electric control chip 4 is additionally provided with an arc-shaped copper pressing sheet as the high thermal conductivity copper plate 5 to tightly press the electric control chip 4. The high thermal conductivity copper plate 5 has two functions of: (1) reducing thermal contact resistance between the electric control chip 4 and a cooling surface by pressurization; and (2) becoming a heat-conducting bridge from a heating surface to the cooling surface. By mounting the high thermal conductivity copper plate 5, heat conduction to the cooling unit from the electric control chip 4 can be entirely strengthened, and the cooling effect of two surfaces of the electric control chip 4 can be promoted. The electric control chip 4 is preferably a plurality of square flat pieces with a side length ranging from about 1 cm to 4 cm, and front and back surfaces of the electric control chip 4 are both the heating surface. In order to reduce contact thermal resistance between the two surfaces of the electric control chip 4 and the cooling unit and the high thermal conductivity copper plate 5, a gap is preferably filled with a high thermal conductivity filler (a thermally conductive grease) to promote heat conduction.

As shown in FIG. 2, on the basis of the first method in the present invention, a wick 6 (preferably in a porous structure) for strengthening boiling heat transfer is laid on the inside inner wall surface 132 of the airtight container 11 as a second improvement method, so as to achieve the purpose of promoting the cooling of the electric control chip 4, wherein the wick 6 has a strong liquid absorption capacity, and also has the functions of strengthening boiling heat transfer and assisting the bubble pump (a second bubble pump in a third improvement method) in conveying the liquid to an upper portion. The wick may be made of a material with a micron-scale aperture, such as a foam metal material, a sintered wire mesh and a sintered metal felt.

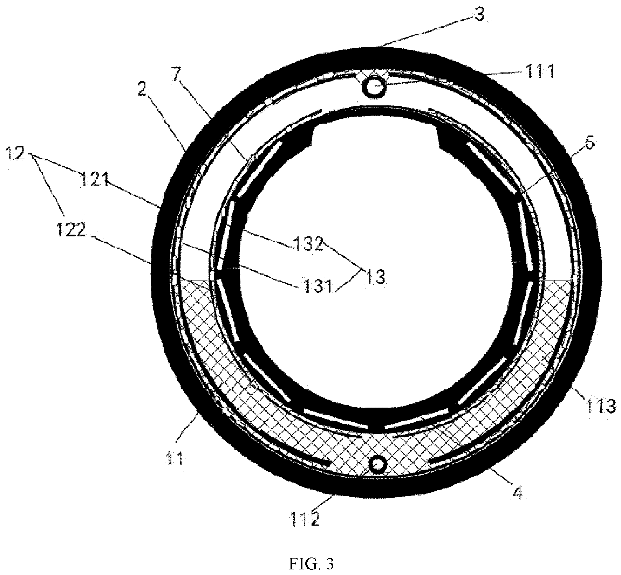

As shown in FIG. 3, as the third improvement method, the second bubble pump 7 is arranged on the other side of the inner wall surface 13 of the airtight container 11 on the basis of the first method in the present invention to promote supply of a cooling liquid to a middle and upper portion, so as to cool the electric control chip mounted in the high position. The second bubble pump 7 preferably has the same structure as the first bubble pump 2.

In the present invention, the other side of the inner wall surface 13 of the airtight container 11 is provided with the second bubble pump 7, and the second bubble pump 7 is preferably arranged on the inside inner wall surface 132.

Because the bubble pump is mounted on the inner wall surface, in this improvement method, the electric control chip 4 may be mounted in an upper portion (beyond the filling liquid level of the cooling working medium) without being laid on a middle and lower portion of the airtight container 11. Specifically, in the present invention, the electric control chip 4 and the high thermal conductivity copper plate 5 extend to the middle and upper portion of the airtight container 11, so that more electric control chips 4 may be mounted on the inside outer wall surface 122 (there is no cooling liquid inside the airtight container 11 in a position corresponding to the electric control chips 4 mounted on the middle and upper portion of the airtight container 11).

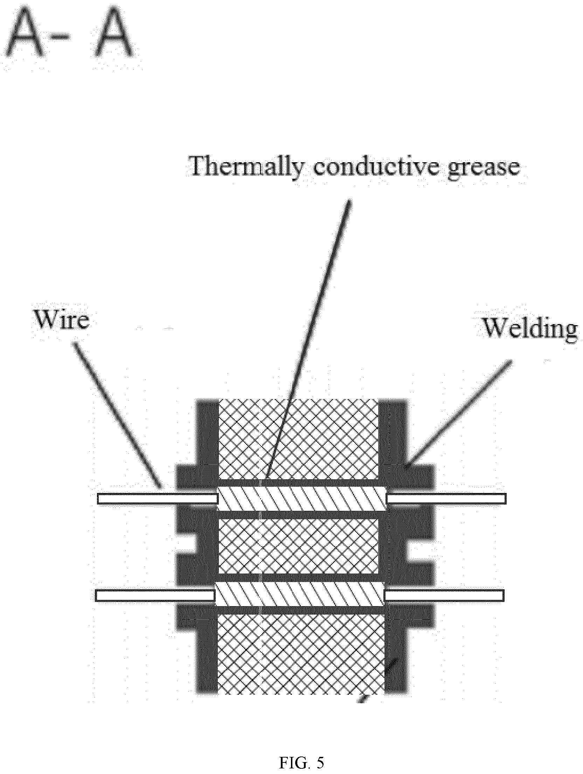

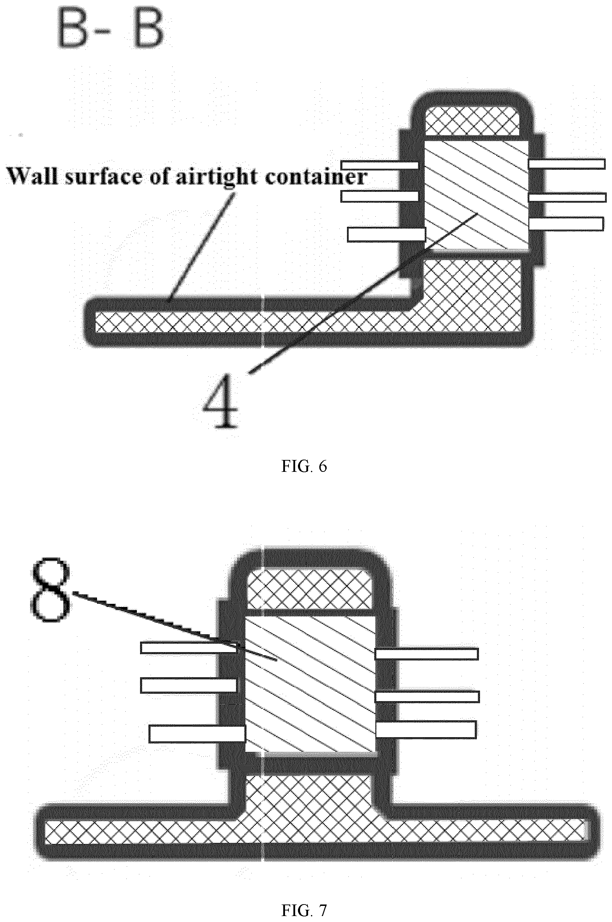

As shown in FIG. 4 to FIG. 7, as a fourth improvement method, on the basis of the first method in the present invention, the airtight container 11 is provided with an inserting hole 8 for inserting the electric control chip 4, the inserting hole 8 is preferably inverted T-shaped (as shown in FIG. 7) or L-shaped (as shown in FIG. 6), the inserting hole 8 is immersed in the cooling working medium 113, and because the cooling working medium 113 has a certain liquid level, a position of the inserting hole 8 cannot be higher than the liquid level of the cooling working medium 113, which is equivalent that the inserting hole 8 is immersed in the cooling working medium 113.

In the fourth improvement method, in order to strengthen the cooling of heating surfaces on two sides of the electric control chip 4, the electric control chip 4 is not attached to the outer surface of the inner wall surface, but a long and narrow inserting hole 8 is set in a bottom portion of the airtight container 11, and the electric control chip 4 is inserted into the inserting hole for cooling. There is no need to strengthen heat transfer of the inside inner wall surface by a porous medium or the second bubble pump 7. The inserting hole 8 should be immersed in the cooling liquid, and the thermally conductive grease is coated between a surface of the electric control chip 4 and a surface of the inserting hole 8 to strengthen heat conduction. According to this structure, two surfaces of the electric control chip 4 may both be efficiently cooled by boiling (a porous surface may be additionally mounted to strengthen boiling heat transfer as required).

In addition, the inside outer wall surface 122 still has the same structure as the cooling unit as shown in FIG. 1 to FIG. 3, and the cooling liquid is supplied from bottom to top by the first bubble pump 2.

In the present invention, a filling amount of the cooling working medium 113 is 30% to 70% of a height of the airtight container 11, and an interior of the airtight container 11 is evacuated by vacuumizing before filling. The cooling working medium 113 may be Novec7100 (engineered liquid), water or alcohol, which is selected according to ranges of operation temperature and pressure.

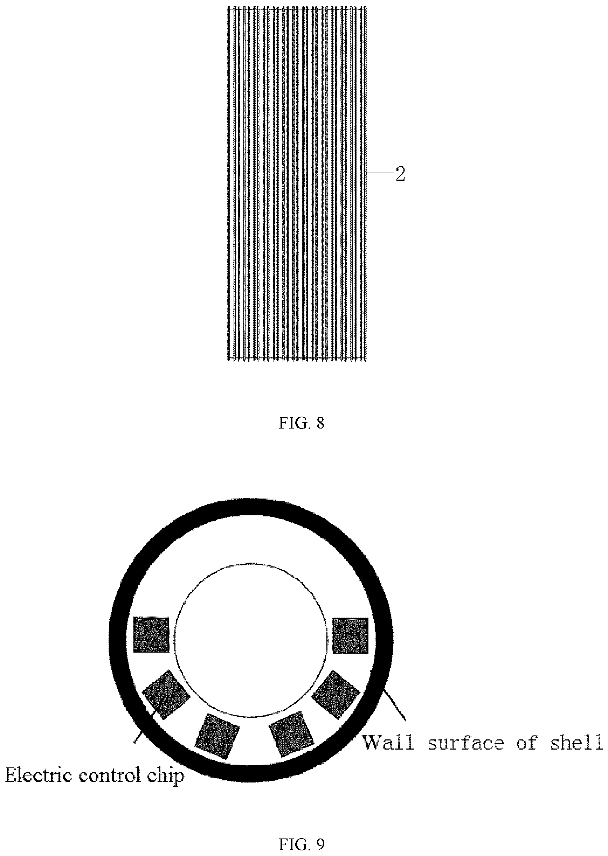

As shown in FIG. 8, in the present invention, the first bubble pump 2 consists of a plurality of parallel narrow flow paths, and a cross section of the flow path is preferably a rectangle.

As shown in FIG. 8, in the present invention, the second bubble pump 7 consists of a plurality of parallel narrow flow paths.

In the present invention, the first bubble pump 2 and the second bubble pump 7 preferably have the same structure, both of which consist of the plurality of parallel narrow flow paths with a non-specified cross-sectional shape, and the shape is preferably a square with a cross-sectional side length of about 1 mm to 3 mm. In order to be tightly attached to the heat transfer surface, the first bubble pump 2 and the second bubble pump 7 should have the same radius of curvature as the corresponding wall surface of the airtight container 11 and are compressed during mounting.

In the present invention, two sides of the electric control chip 4 are coated with the thermally conductive grease to strengthen heat transfer.

FIG. 9 is a schematic diagram of an improvement mode of an arrangement position of the electric control chip in the present invention. In order to better ensure the tight contact between the chip and the wall surface of the cooling unit, the electric control chip may be arranged on the flat wall surface of the cooling unit, such as two annular flat wall surfaces perpendicular to the outer wall surface 12 and the inner wall surface 13. In this improvement mode, the high thermal conductivity copper plate may still be used to press the electric control chip against the wall surface of the cooling unit, and the inside inner and outer wall surfaces of the cooling unit with the electric control chip can optimize the performance by means of the bubble pump, the wick, etc.

The above are merely preferred specific embodiments of the present invention, but the scope of protection of the present invention is not limited to this. Equivalent substitutions or changes made by those skilled in the art according to the technical solutions and improvement concepts of the present invention within the scope of the apended claims.

## Claims

1. An integrated cooling unit for an in-wheel motor, comprising:
an airtight container (11), which is suitable to be arranged inside an in-wheel motor (1), for packaging a cooling working medium (113), and provided with a vapor outlet (111) and a liquid return port (112);
a bubble pump, which is laid on an inner wall surface of the airtight container (11), suitable for driving the cooling working medium (113) to be conveyed to an upper portion of the airtight container (11);
a motor coil (3), which is laid on an outside outer wall surface of the airtight container (11); and
an electric control chip (4), which is arranged on the wall surface of the airtight container (11), and the cooling working medium (113) reaching a mounting position of the electric control chip.

2. The integrated cooling unit for the in-wheel motor according to claim 1, wherein the bubble pump comprises a first bubble pump (2), and the first bubble pump (2) is arranged on one side of the inner wall surface of the airtight container (11).

3. The integrated cooling unit for the in-wheel motor according to claim 2, wherein the other side of the inner wall surface of the airtight container (11) is provided with a second bubble pump (7).

4. The integrated cooling unit for the in-wheel motor according to claim 1, wherein the electric control chip (4) is laid on an inside outer wall surface of the airtight container (11), and a high thermal conductivity copper plate (5) is laid on an outer side of the electric control chip.

5. The integrated cooling unit for the in-wheel motor according to claim 4, wherein a wick (6) for strengthening boiling heat transfer is laid on an inside inner wall surface of the airtight container (11).

6. The integrated cooling unit for the in-wheel motor according to claim 4, wherein the electric control chip (4) and the high thermal conductivity copper plate (5) extend to a middle and upper portion of the airtight container (11).

7. The integrated cooling unit for the in-wheel motor according to claim 1, wherein the airtight container (11) is provided with an inserting hole (8) for inserting the electric control chip (4), and the inserting hole (8) is immersed in the cooling working medium.

8. The integrated cooling unit for the in-wheel motor according to claim 1, wherein a filling amount of the cooling working medium (113) is 30% to 70% of a height of the airtight container.

9. The integrated cooling unit for the in-wheel motor according to claim 1, wherein the first bubble pump (2) consists of a plurality of parallel narrow flow paths.

10. The integrated cooling unit for the in-wheel motor according to claims 1 to 9, wherein two sides of the electric control chip (4) are coated with a thermally conductive grease.

## Patentansprüche

1. Eine integrierte Kühleinheit für einen Radnabenmotor, bestehend aus:
einem luftdichten Behälter (11), der zur Anordnung im Inneren eines Radnabenmotors (1) geeignet ist und ein Kühlmedium (113) aufnimmt, mit einem Dampfauslass (111) und einem Flüssigkeitsrücklaufanschluss (112);
eine Blasenpumpe, die an einer Innenwandfläche des luftdichten Behälters (11) angebracht ist und geeignet ist, das zu fördernde Kühlmedium (113) in einen oberen Bereich des luftdichten Behälters (11) zu befördern;
einer Motorspule (3), die an einer Außenwandfläche des luftdichten Behälters (11) angeordnet ist; und
einem elektronischen Steuerchip (4), der an der Wandfläche des luftdichten Behälters (11) angeordnet ist, wobei das Kühlmedium (113) die Montageposition des elektronischen Steuerchips erreicht.

2. Die integrierte Kühleinheit für den Radnabenmotor nach Anspruch 1, wobei die Blasenpumpe eine erste Blasenpumpe (2) umfasst und die erste Blasenpumpe (2) auf einer Seite der Innenwandfläche des luftdichten Behälters (11) angeordnet ist.

3. Die integrierte Kühleinheit für den Radnabenmotor nach Anspruch 2, wobei die andere Seite der Innenwandfläche des luftdichten Behälters (11) mit einer zweiten Blasenpumpe (7) versehen ist.

4. Die integrierte Kühleinheit für den Radnabenmotor nach Anspruch 1, wobei der elektrische Steuerchip (4) auf einer inneren Außenwandfläche des luftdichten Behälters (11) angeordnet ist und eine Kupferplatte (5) mit hoher Wärmeleitfähigkeit auf der Außenseite des elektrischen Steuerchips angeordnet ist.

5. Die integrierte Kühleinheit für den Radnabenmotor nach Anspruch 4, wobei ein Docht (6) zur Verstärkung des Wärmeübergangs beim Sieden an einer inneren Innenwandfläche des luftdichten Behälters (11) angeordnet ist.

6. Die integrierte Kühleinheit für den Radnabenmotor nach Anspruch 4, wobei sich der elektrische Steuerchip (4) und die Kupferplatte (5) mit hoher Wärmeleitfähigkeit bis zu einem mittleren und oberen Abschnitt des luftdichten Behälters (11) erstrecken.

7. Die integrierte Kühleinheit für den Radnabenmotor nach Anspruch 1, wobei der luftdichte Behälter (11) mit einer Einführöffnung (8) zum Einsetzen des elektrischen Steuerchips (4) versehen ist und die Einführöffnung (8) in das Kühlmedium eingetaucht ist.

8. Die integrierte Kühleinheit für den Radnabenmotor nach Anspruch 1, wobei der Füllstand des Kühlmediums (113) 30% bis 70% der Höhe des luftdichten Behälters beträgt.

9. Die integrierte Kühleinheit für den Radnabenmotor nach Anspruch 1, wobei die erste Blasenpumpe (2) aus einer Vielzahl paralleler schmaler Strömungswege besteht.

10. Die integrierte Kühleinheit für den Radnabenmotor nach den Ansprüchen 1 bis 9, wobei zwei Seiten des elektrischen Steuerchips (4) mit einem wärmeleitenden Fett beschichtet sind.

## Revendications

1. Unité de refroidissement intégrée pour un moteur-roue, comprenant :
un récipient étanche à l'air (11), qui est adapté pour être disposé à l'intérieur d'un moteur-roue (1), pour
le conditionnement d'un milieu de travail de refroidissement (113), et pourvu d'une sortie de vapeur (111) et d'un port de retour de liquide (112),
Une pompe à bulles, qui est posée sur une surface de paroi interne du récipient étanche à l'air (11), adaptée
pour entraîner le milieu de travail de refroidissement (113) à acheminer vers une partie supérieure du récipient étanche à l'air (11) ;
une armature de moteur (3), qui est posée sur une surface de paroi externe extérieure du récipient étanche à l'air (11), et
une puce de commande électrique (4), qui est disposée sur la surface de paroi du récipient étanche à l'air (11), et le milieu de travail de refroidissement (113) atteignant une position de montage de la puce de commande électrique.

2. Unité de refroidissement intégrée pour le moteur-roue selon la revendication 1, dans laquelle la pompe à bulles comprend une première pompe à bulles (2), et la première pompe à bulles (2) est disposée sur un côté de la surface de paroi interne du récipient étanche à l'air (11).

3. Unité de refroidissement intégrée pour le moteur-roue selon la revendication 2, dans laquelle l'autre côté de la surface de paroi interne du récipient étanche à l'air (11) est pourvu d'une deuxième pompe à bulles (7).

4. Unité de refroidissement intégrée pour le moteur-roue selon la revendication 1, dans laquelle la puce de commande électrique (4) est posée sur une surface de paroi externe intérieure du récipient étanche à l'air (11), et une plaque de cuivre à conductivité thermique élevée (5) est posée sur un côté externe de la puce de commande électrique.

5. Unité de refroidissement intégrée pour le moteur-roue selon la revendication 4, dans laquelle une mèche (6) pour renforcer le transfert de chaleur par ébullition est posée sur une surface de paroi interne intérieure du récipient étanche à l'air (11).

6. Unité de refroidissement intégrée pour le moteur-roue selon la revendication 4, dans laquelle la puce de commande électrique (4) et la plaque de cuivre à conductivité thermique élevée (5) s'étendent jusqu'à une partie médiane et supérieure du récipient étanche à l'air (11).

7. Unité de refroidissement intégrée pour le moteur-roue selon la revendication 1, dans laquelle le récipient étanche à l'air (11) est pourvu d'un trou d'insertion (8) pour insérer la puce de commande électrique (4), et le trou d'insertion (8) est immergé dans le milieu de travail de refroidissement.

8. Unité de refroidissement intégrée pour le moteur-roue selon la revendication 1, dans laquelle une quantité de remplissage du milieu de travail de refroidissement (113) est de 30% à 70% d'une hauteur du récipient étanche à l'air.

9. Unité de refroidissement intégrée pour le moteur-roue selon la revendication 1, dans laquelle la première pompe à bulles (2) est constituée d'une pluralité de trajets d'écoulement étroits parallèles.

10. Unité de refroidissement intégrée pour le moteur-roue selon les revendications 1 à 9, dans laquelle deux côtés de la puce de commande électrique (4) sont revêtus d'une graisse thermiquement conductrice.
